(19) Europäisches Patentamt
European Patent Office
Office européen des brevets

(11) **EP 1 815 903 B1**

(12) **EUROPEAN PATENT SPECIFICATION**

(45) Date of publication and mention
of the grant of the patent:
**06.08.2008 Bulletin 2008/32**

(51) Int Cl.:
***B01D 53/83*** *(2006.01)*   ***B01D 53/30*** *(2006.01)*
***B01D 53/50*** *(2006.01)*   ***B01D 53/14*** *(2006.01)*

(21) Application number: **06101337.1**

(22) Date of filing: **06.02.2006**

(54) **Method and device for controlling the absorption of gaseous pollutants from hot process gases**

Verfahren und Vorrichtung zur Steuerung der Absorption von gasförmigen Verunreinigungen aus heissen Prozessgasen

Procédé et dispositif pour contrôler l'absorption de polluants gazeux de gaz chauds

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**08.08.2007 Bulletin 2007/32**

(73) Proprietor: **Alstom Technology Ltd**
**5401 Baden (CH)**

(72) Inventor: **Johansson, Evald**
**352 61 Växjö (SE)**

(74) Representative: **Hjalmarsson, Magnus Axel et al**
**Awapatent AB,**
**Box 5117**
**200 71 Malmö (SE)**

(56) References cited:
**EP-A- 0 882 490**      **WO-A-99/59704**
**WO-A-20/04026443**   **DE-A1- 3 510 669**
**US-A- 4 590 046**

**Description**

Field of the invention

The present invention relates to a method of separating gaseous pollutants, such as hydrochloric acid and sulphur dioxide, from hot process gases, such as flue gases, in which method the process gases are passed through a gas cleaning system comprising a contact reactor, a dust separator and a dust moistening device.

The present invention also relates to a gas cleaning system for separating gaseous pollutants from process gases.

Background of the invention

When separating gaseous pollutants, such as hydrochloric acid and sulphur dioxide, from process gases, such as flue gases from a coal- or oil-fired power plant or from a waste incineration plant, a method is frequently used, in which a lime-containing absorbent material is introduced into the process gas to react with the gaseous pollutants. When the absorbent material reacts with the gaseous pollutants, the gaseous pollutants are converted chemically or physically into dust, which is then separated in a filter. WO 96/16722 discloses a method, in which lime-containing dust is mixed with water in a mixer and is then introduced into a contact reactor to react with gaseous pollutants in a flue gas. Then the dust is separated in a filter and recirculated to the mixer to be mixed once more with water and subsequently be introduced into the contact reactor.

The removal of gaseous pollutants is to a large extent determined by the moisture content and temperature in the process gas and the amount of dust recirculated. In peak situations, i.e. situations when the content of a gaseous pollutant increases rapidly, the moisture content in the flue gas is normally increased by increasing the amount of water that is mixed with the dust in order to increase the removal efficiency during the peak situation. The amount of absorbent added is also increased to manage the increased content of the gaseous pollutant. Since the recirculated dust may contain some substances, such as calcium chloride, being prone to make the dust sticky, it is necessary to, simultaneously with increasing the water added to the dust, also increase the amount of the absorbent added to the dust, to avoid stickiness of the dust. The amount of absorbent that needs to be added to avoid stickiness of the dust is often larger than the amount necessary to manage the increased content of the gaseous pollutant. This leads to an increased consumption of absorbent.

Summary of the invention

An object of the present invention is to provide a method of managing peak situations as regards the content of a gaseous component by which method the absorbent consumption is not as high as in the prior art. A further object of the present invention is to provide a method in which the amount of absorbent used also in steady state operation is decreased.

These objects are achieved by a method of separating gaseous pollutants, such as hydrochloric acid and sulphur dioxide, from hot process gases, such as flue gases, in which method the process gases are passed through a gas cleaning system comprising a contact reactor, a dust separator and a dust moistening device, the process gases first being passed through the contact reactor in which a particulate absorbent material reactive with the gaseous pollutants is introduced in a moistened state into the process gases in order to convert the gaseous pollutants into separable dust, after which the process gases are passed through the dust separator, in which dust is separated from the process gases and from which the cleaned process gases are discharged, at least a portion of the dust collected in the dust separator being mixed with water to be transferred to a moistened state by means of the dust moistening device and to be introduced as said particulate absorbent material into the process gases in the contact reactor once again, a portion of the dust circulating in the gas cleaning system being discharged, the method being characterised in

measuring the content in the process gases, upstream of the contact reactor, of at least one sticky component being prone to cause sticking problems in the dust,

measuring, directly or indirectly, the flow of said portion of the dust circulating in the gas cleaning system being discharged,

calculating the current concentration of said sticky component in the dust circulating in the gas cleaning system based on a mass balance incorporating historical data on measured flow of discharged dust and historical data on the measured content of said sticky component in the process gases upstream of the contact reactor, and

controlling at least one control parameter of said gas cleaning system, which control parameter influences the stickiness of the circulating dust, in response to said current concentration of said sticky component in the dust circulating in the gas cleaning system.

An advantage of this method is that by knowing the current concentration of a sticky component, for example chlorides, in the dust circulating in the system it is possible to control the system in a more efficient way. For example the gas cleaning system may be operated, at steady state operation, with a smaller excess of absorbent, such as hydrated lime, compared to the prior art. In a peak situation, with a high concentration of a gaseous pollutant such as $SO_2$ or HCl, the response of the gas cleaning system is made to depend on the current concentration of chloride. Many control parameters which influence the capability of the system to handle the peak situation also have an influence on the stickiness of the dust. If, for example, the current chloride concentration in the dust is low then the control parameter "water added to the mixer" may be allowed to be increased to improve the conversion efficiency in the contact reactor. If, on the other hand, the current chloride concentration is high it might be necessary to instead increase the feed of fresh absorbent and/or increase the amount of dust circulating in the system, since an increased amount of water may cause problems with sticky dust. With knowledge of the current chloride concentration in the dust, i.e. the chloride concentration in the dust at the very moment a control decision must be taken, the control of the gas cleaning system may be improved.

According to one preferred embodiment said at least one control parameter includes a flow of fresh absorbent to the gas cleaning system, the flow of fresh absorbent being controlled to keep the concentration of said sticky component in the dust circulating in the gas cleaning system below a limit concentration. An advantage of this control parameter is that the flow of fresh absorbent often has a very large impact on the operating cost of a plant. By controlling this parameter the operating cost may be decreased.

According to another preferred embodiment said at least one control parameter includes a flow of water fed to the gas cleaning system to moisten the dust, the flow of water being controlled to keep the content of water in the moistened dust below the content at which sticking may occur. The flow of water fed to the system has a large and quick effect on both gas cleaning efficiency and stickiness of the dust. By controlling this parameter the efficiency of the gas cleaning system may be increased without problems of stickiness of the dust.

According to a still further embodiment said at least one control parameter includes an amount of fly ash entering the gas cleaning system. The amount of fly ash could be controlled, for instance, by adjusting the efficiency of an upstream fly ash collector or by adding fly ash from an external source. The added fly ash dilutes the dust circulating in the gas cleaning system and decreases the concentration of said sticky component. An advantage of this control parameter is that the fly ash is usually available at low cost and in large quantities at a combustion plant. The concentration of said sticky component in the fly ash itself should be lower than the concentration of said sticky component in the dust circulating in the flue gas cleaning system, in order to have a diluting effect.

Preferably historical measured data on a flow of fresh absorbent to said gas cleaning system is included in the mass balance when calculating the current concentration of said sticky component in the dust circulating in the gas cleaning system. Further historical measured data on a flow of at least one major reaction product formed during the conversion of gaseous pollutants into separable dust is included in the mass balance when calculating the current concentration of said sticky component in the dust circulating in the gas cleaning system. By adding information on the flows of fresh absorbent, reaction products, such as S02 and HCl reaction products, fly ash etc. the calculations of current chloride concentration may be made more accurate since these flows may in some cases be more accurate than the measurement of the amount of dust discharged. Thus these flows can be used to check that the measured amount of dust being discharged is correct. It is also possible to use these flows as an indirect measurement of the amount of dust discharged from the system. This may, in particular, be useful in cases where there is no measurement signal indicating when and to which amount discharge of dust is made from the system.

Preferably the method according to the invention accounts for a sticky component chosen from the group containing chloride, ammonia and zinc. In waste incineration plants the hydrochloric acid, HCl, content in the flue gases is often quite significant and thus chlorides, which may be present in the dust in the form of $CaCl_2 \cdot 2H_2O$, are often an important factor for the sticky properties of the circulating dust. SCR (Selective Catalytic Reduction) and SNCR (Selective Non-Catalytic Reduction) gas cleaning units are often used to remove nitrogen oxides, NOx, from flue gases by means of an addition of, for example, ammonia, $NH_3$, or urea. Ammonia is known for having sticky properties in dust. If an SCR or SNCR unit is located upstream of the gas cleaning system it may be advantageous to measure the amount of ammonia in the flue gases, calculate the current concentration of ammonia in the dust circulating in the gas cleaning system, and to adjust control parameters according to the present invention in order to obtain good control with limited risk of problems with sticky dust. In plants with a high amount of zinc in the flue gas a similar calculation of current zinc concentration in the dust could be made. It will be appreciated that the present invention makes it possible to account for one, two or even more different sticky components.

Another object of the present invention is to provide a gas cleaning system which provides for low consumption of absorbent and low amount of dust discharged both during peak situations and in steady state operation.

This object is achieved by a gas cleaning system for separating gaseous pollutants, such as hydrochloric acid and sulphur dioxide, from hot process gases, such as flue gases, the system comprising a contact reactor, a dust separator and a dust moistening device, the contact reactor being adapted for receiving process gases and for first passing them through the contact reactor in which a particulate absorbent material reactive with the gaseous pollutants is introduced in a moistened state into the process gases in order to convert the gaseous pollutants into separable dust, the dust separator being adapted to then receive the process gases, to separate dust from the process gases and to discharge the cleaned process gases, the dust moistening device being adapted for transferring at least a portion of the dust collected in the dust separator to a moistened state by mixing such dust with water and to introduce such dust mixed with water as said particulate absorbent material into the process gases in the contact reactor once again, a portion of the dust circulating in the gas cleaning system being discharged, the system being characterised in that it further comprises

a first measurement device adapted for measuring the content in the process gases, upstream of the contact reactor, of at least one sticky component being prone to cause sticking problems in the dust,

a second measurement device adapted for measuring, directly or indirectly, the flow of said portion of the dust circulating in the gas cleaning system being discharged,

a calculating device adapted for calculating the current concentration of said sticky component in the dust circulating in the gas cleaning system based on a mass balance incorporating historical data on measured flow of discharged dust and historical data on the measured content of said sticky component in the process gas upstream of the contact reactor, and

a control device controlling at least one control parameter of said gas cleaning system, which control parameter influences the stickiness of the circulating dust, in response to said current concentration of said sticky component in the dust circulating in the system.

An advantage of this gas cleaning system is that it provides for large flexibility as regards the contents of gaseous pollutants in the flue gas, low consumption of fresh absorbent and a low amount of dust discharged.

Further objects and features of the present invention will be apparent from the description and the claims.

Brief description of the drawings

The invention will now be described in more detail with reference to the appended drawings in which:

Fig. 1 is a schematic side view and shows a gas cleaning system according to the invention.
Fig. 2 is a diagram and shows the composition of a dust when operating the system according to the invention.
Fig. 3 is a diagram and indicates the discharge frequency when operating the system according to the invention.
Fig. 4 is a diagram and shows the composition of the dust in a comparative example, according to prior art.
Fig. 5 is a diagram and indicates the discharge frequency in the comparative example.

Description of preferred embodiments

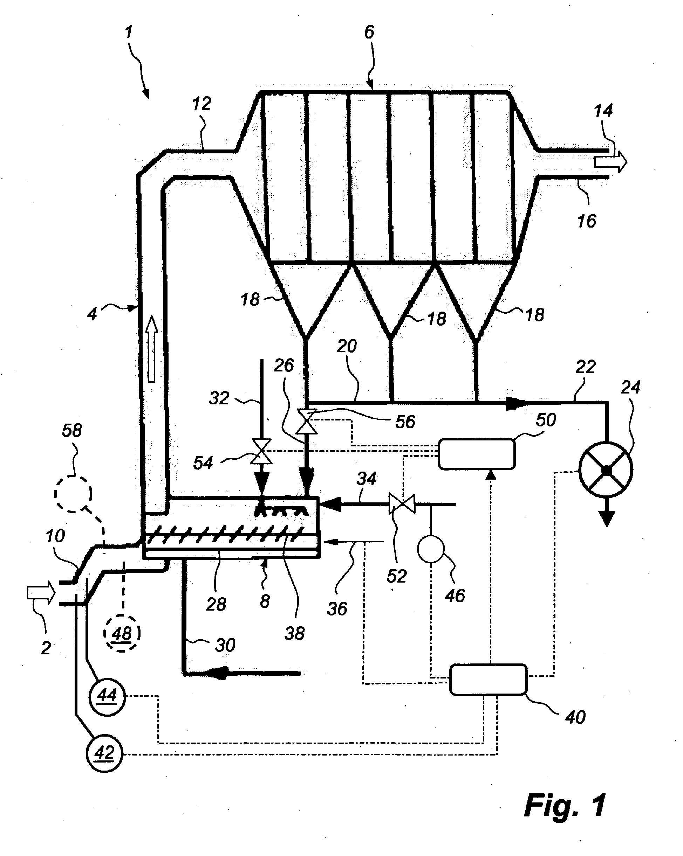

Fig. 1 shows a gas cleaning system 1. The system 1 is adapted for cleaning process gases in the form of flue gases 2 that are formed during incineration of a waste, such as municipal or industrial waste, in a waste incinerator, not shown. The flue gases 2 contain dust, such as fly ash, and gaseous pollutants, such as sulphur dioxide and hydrochloric acid, that are produced during the incineration. The flue gas cleaning system 1 comprises a contact reactor 4, a dust separator in the form of a fabric filter 6, sometimes referred to as a bag house, and a mixer 8. The flue gases 2 are first passed via a duct 10 to the contact reactor 4. In the contact reactor 4 a particulate absorbent material reactive with the gaseous pollutants in the flue gas 2 is introduced in a moistened state into the flue gases 2 in order to convert the gaseous pollutants into separable dust. The flue gas 2, and the dust, is forwarded, via a duct 12, to the fabric filter 6 in which the dust is separated from the flue gas 2. The cleaned flue gas 14 leaves the fabric filter 6 via a duct 16 and is emitted into the ambient air via a stack, not shown. The fabric filter 6 has three dust hoppers 18 collecting the separated dust.

The separated dust reaches a common dust storage system indicated as 20 in Fig. 1. A minor portion of the dust separated in the fabric filter 6 is discharged from the gas cleaning system 1 via a pipe 22. The pipe 22 ends in a rotary discharger 24. The rotary discharger 24 feeds the discharged dust into a silo (not shown) for storing end product or feeds the discharged dust directly to a truck for transportation to e.g. a landfill.

While said minor portion of dust is discharged from the system 1 by means of the rotary discharger 24 the major portion of the dust is fed, via a pipe 26, to the mixer 8. The mixer 8 is provided with a fluidising cloth or net 28. Pressurised air is introduced under the cloth 28 via a pipe 30 in order to fluidise the dust in the mixer 8. Water is added to the mixer 8 via a pipe 32 and fresh absorbent, such as burnt lime, CaO, or hydrated lime, $Ca(OH)_2$, is added to the mixer 8 via a pipe 34. The water moistens the dust and slakes any burnt lime, CaO, to form hydrated lime, $Ca(OH)_2$. Further additives, such as activated carbon, may be fed via a pipe 36. The mixer 8 is provided with an agitator 38 for thoroughly mixing the dust with water, fresh absorbent and any further additives. A thorough description of a mixer useful in the present invention may be found in WO 97/37747 A1. The dust, that has been moistened by the water added via the pipe 32, is introduced at the bottom of the contact reactor 4 and is thereby introduced into the flue gases 2 for absorbing further gaseous pollutants from the flue gases 2. It will be appreciated that the dust is circulated many times in the gas cleaning system 1. The minor portion discharged via the rotary discharger 24 is intended for keeping the amount of dust in the system 1 constant. The flue gas contains some fly ash, reaction products are formed continuously and fresh absorbent and additives are added such that there is a continuous flow of dust into the system 1 which is compensated for by the discharge of dust via the discharger 24. Thus the amount of dust in the system 1 is rather constant over time.

The system 1 comprises a calculating device 40. The calculating device 40 operates to keep control of the concentration of certain sticky components in the dust circulating in the system 1. Sticky components in the dust are mainly chlorides, ammonia and zinc. In particular chlorides have a large influence on the tendency of the dust to get sticky. A sticky dust may cause severe problems in the fabric filter 6, the pipes 20, 22, the mixer 8 and in the rotary discharger 24. A sticky dust may also cause problems for the storage and transportation of the discharged dust. The flue gases 2 contain chlorides mainly in the form of gaseous hydrochloric acid, HCl. In the contact reactor 4 the HCl reacts with the dust and forms, if a calcium containing fresh absorbent, such as burnt lime, is used, solid calcium chloride, $CaCl_2 \cdot 2H_2O$. In this compound the chlorides may cause severe sticking problems if the concentration becomes too high. The calculating device 40 receives a signal from an HCl analyser 42, which gives substantially continuous indications of the content of HCl in the flue gases 2 in the duct 10, i.e. before the flue gases 2 enter the contact reactor 4. The device 40 further receives a signal from an $SO_2$ analyser 44, which gives substantially continuous indications of the content of sulphur dioxide, $SO_2$, in the flue gases 2 in the duct 10. The pipe 34 is provided with a flow meter 46 measuring the flow of fresh absorbent to the mixer 8. The flow meter 46 may in practice be a level meter measuring the amount of fresh absorbent in an absorbent silo, not shown, thus indicating, indirectly, the flow of fresh absorbent to the mixer 8. The device 40 also receives a signal indicating the flow of additive via the pipe 36. A further signal is sent from the rotary discharger 24 to the device 40. The volume of dust discharged per unit of time from the discharger 24 is known from its product data sheet, or can be measured in a calibration, and thus the rotary discharger 24 works as a measurement device measuring the amount of dust discharged. The signal from the rotary discharger 24 thus indicates the amount of dust discharged from the system 1. A further input to the device 40 is the amount of fly ash in the flue gases 2 in the duct 10. This amount could be measured by a fly ash measurement device 48 sending a signal to the device 40. The fly ash content in the flue gases 2 tends to be quite constant at a certain load. Since continuous measurement of dust is rather expensive it is often preferable to enter an expected value of the fly ash content into the device 40. A further option is to provide the device 40 with a load signal indicating the load in the incineration unit and to make use of an equation indicating the relation between load and expected fly ash content in the flue gases 2. From the central operating system of the incinerator plant data on the flue gas flow and on the humidity in the flue gases 2 is sent to the device 40.

Based on the inputs to the calculating device 40 the calculating device 40 makes a mass balance calculation for the dust circulating in the system taking into account historical data of all major contributors to the composition of the dust. Thereby it is possible for the calculating device 40 to calculate the current concentrations of all relevant components in the dust circulating in the system and in particular the current concentrations of the sticky components, such as chlorides.

Below an example of the calculations made in the calculating device 40 are given for a waste incineration plant operating with burnt lime, CaO, as fresh absorbent and with rather high concentrations of SO2 and HCl in the flue gas 2. The following calculations are made:

<ins>General input data:</ins>

Data on the following parameters are measured by a system controlling the general operation of the waste incineration plant:

| Parameter | Value | Unit |
| --- | --- | --- |
| Flue gas flow | QFG | $Nm^3/s$ w.g. |
| Flue gas humidity | CH2O | % |

<ins>Fly ash:</ins>

It is expected that all of the fly ash entering the system is removed in the fabric filter 6, since the percentage of the fly ash passing through the fabric filter 6 is negligible. For other types of dust separators, such as cyclones, the fly ash leaving the dust separator could be accounted for. The flow of fly ash to the system 1 is calculated as:

| Parameter | Value | Unit |
| --- | --- | --- |
| Fly ash concentration | CFA | $mg/Nm^3$ d.g. |
| Fly ash flow | mFA | kg/s |

$$mFA = QFG * CFA * (1 - CH2O/100) *10^{-6} \quad [kg/s]$$

Additive in the form of activated carbon:

It is assumed that the added amount of activated carbon, AC, is completely separated in the fabric filter 6 and thus the flow of activated carbon to the system 1 is:

| Parameter | Value | Unit |
|---|---|---|
| AC concentration | CC | mg/Nm$^3$ d.g. |
| AC flow | mC | kg/s |

$$mC = QFG * CC * (1 - CH2O/100) *10^{-6} \quad [kg/s]$$

Sulphur products:

The flue gases 2 contain $SO_2$. During reaction in the contact reactor 4 formation of a mixture of $CaSO_3$ and $CaSO_4$ associated with n water molecules occurs. Based on experience 1.0 gram of $SO_2$ forms 2.15 g of this mixture. In the calculation account is also taken for the small amount of $SO_2$ which is not removed in the gas cleaning system. Thus the flow of a reaction product, being one of the major reaction products in many gas cleaning systems, formed from the absorption of $SO_2$ can be calculated in the following way:

| Parameter | Value | Unit |
|---|---|---|
| SO2 inlet concentration | CSO2IN | mg/Nm$^3$ d.g. |
| SO2 outlet concentration | CSO2OUT | mg/Nm$^3$ d.g. |
| SO2 flow | mSO2 | kg/s |
| SO2 flow | MSO2 | mole/s |
| CaSO3&SO4 * nH2O/SO2 | 2.15 | (g/g) |
| CaSO3&SO4 * nH2O flow | mCaS | kg/s |

$$mSO2 = QFG*(CSO2IN-CSO2OUT)*(1-CH2O/100)*10^{-6} \quad [kg/s]$$

$$MSO2 = mSO2 / 64 * 10^3 \quad [mol/s]$$

$$mCaS = 2.15*QFG *(CSO2IN - CSO2OUT)*(1-CH2O/100)*10^{-6} \quad [kg/s]$$

Chloride products:

The flue gases 2 contain HCl. During reaction in the contact reactor 4 formation of $CaCl_2$ associated with two water molecules occurs. 1.0 gram of HCl forms 2.01 g of $CaCl_2x2H_2O$. Thus the flow of a reaction product, being one of the major reaction products in many gas cleaning systems, formed from the absorption of HCl can be calculated in the following way:

| Parameter | Value | Unit |
|---|---|---|
| HCl inlet concentration | CHCIIN | mg/Nm$^3$ d.g. |
| HCl outlet concentration | CHCIOUT | mg/Nm$^3$ d.g. |
| HCl flow | mHCl | kg/s |

(continued)

| Parameter | Value | Unit |
|---|---|---|
| HCl flow | MHCl | mole/s |
| CaCl2 * 2H2O/HCl | 2.01 | (g/g) |
| CaCl2 * 2H2O flow | mCaCl | kg/s |

$$mHCl = QFG*(CHClIN-CHClOUT)*(1-CH2O/100)*10^{-6} \ [kg/s]$$

$$MHCl = mHCl / 36.5 * 10^3 \ [mole/s]$$

$$mCaCl = 2.01*QFG*(CHClIN-CHClOUT)*(1-CH2O/100)*10^{-6} \ [kg/s]$$

<u>Not utilized lime products:</u>

Most of the burnt lime, CaO, added as fresh absorbent will participate in the conversion of $SO_2$ and HCl and will be accounted for in the calculation of the reaction products as described above. Some of the burnt lime is, however, inert and some of it will not react for other reasons. Additionally some of the lime will react with carbon dioxide, $CO_2$, in the gas and form $CaCO_3$. The flow of the products formed from that portion of the burnt lime, which is not utilized for absorption of HCl and SO2, is accounted for in the following way:

| Parameter | Value | Unit |
|---|---|---|
| Lime flow | mCaO | kg/s |
| Lime flow | MCaO | mole/s |
| Inert fraction in lime | CINERT | % |
| Inert lime flow | mINERT | kg/s |
| Not utilized lime flow | MCaOEXCESS | mole/s |
| Ratio of not utilized lime that is carbonized | RCaCO3 | % |
| Carbonized lime flow | mCaCO3 | kg/s |
| Hydrated lime flow | mCa(OH)2 | kg/s |

$$mINERT = mCaO * CINERT /100 \ [kg/s]$$

$$MCaOEXCESS = mCaO * (1 - CINERT / 100) * 10^3 / 56 - MHCl / 2 - MSO2 \ [kg/s]$$

$$mCaCO3 = MCaOEXCESS * RCaCO3 / 100 * 100 *10^{-3} \ [kg/s]$$

$$mCa(OH)2 = MCaOEXCESS * (1 - RCaCO3 / 100) * 74 * 10^{-3} \ [kg/s]$$

Mass flow of dust to gas cleaning system:

For each individual mass flow, mentioned above, it is calculated how much has been added to the mass of dust in the gas cleaning system during a short time period dt. The time period dt is typically 1 s to 1 min. For example as regards $CaCl_2*2H_2O$ it is calculated, based on the measured concentration of HCl in the gas and the gas flow, how much $CaCl_2*H_2O$ was added to the mass of dust in the gas cleaning system during the short time period dt. The mass of dust in the gas cleaning system is thereby updated with a frequency of dt by the following:

| Parameter | Value | Unit |
|---|---|---|
| Mass of dust in system | m(t) | kg |

```
m(t+dt) = m(t) + mFA(t)*dt + mC(t)*dt + mINERT(t)*dt
+ mCaCO3(t)*dt + mCa(OH)2(t)*dt + mCaS(t)*dt +
mCaCl(t)*dt
```

Mass flow of dust from gas cleaning system:

The discharge of dust via the rotary discharger 24 is often not continuous and takes place if the dust volume in the hoppers 18 exceeds a limit. When the volume exceeds the limit the discharger 24 is started and operated for a certain time, e.g. 60 seconds. Based on the product specification of the discharger 24 it is known how large a volume of dust that can be discharged per second. The discharge of dust may be calculated by the following:

| Parameter | Value | Unit |
|---|---|---|
| Mass of dust in system | m(t) | kg |
| Volume of dust in system | VTOT | $m^3$ |
| Discharge volume capacity | VDIS | $m^3/s$ |
| Discharge mass capacity | mDIS | kg/s |
| Discharge duration each time | tDIS | s |
| Dust density | DDEN | $kg/m^3$ |
| Discharge volume each time | DVDIS | $m^3$ |
| Discharged mass each time | DmDIS | kg |
| Limit volume for discharge | VMAX | $m^3$ |

$$VTOT = m(t) / DDEN \quad [m^3]$$

Discharge takes place if: VTOT > VMAX
Unloading volume and mass if unloading:

$$DVDIS = VDIS * tDIS \quad [m^3]$$

$$DmDIS = DVDIS * DDEN \quad [kg]$$

Mass of dust in system:

The current mass of dust in the gas cleaning system 1 is decreased each time a discharge occurs and is calculated as the difference between the mass flow to the system minus the amount discharged from the system. Over time the mass of dust in the system is constant but on a shorter time scale the mass varies due to the variations in the mass flow to the system and due to the discontinuous discharge of dust from the system.

| Parameter | Value | Unit |
|---|---|---|
| Mass of dust in system | m(t) | kg |

$$VTOT = m(t) / DDEN \text{ until } VTOT > VMAX$$

$$m(t) = VTOT * DDEN - DmDIS$$

after each following discharge

$$m(t+dt) = m(t) + mFA(t)*dt + mC(t)*dt + mINERT(t)*dt + mCaCO3(t)*dt + mCa(OH)2(t)*dt + mCaS(t)*dt + mCaCl(t)*dt$$

describes the increased mass between discharges

Concentrations in gas cleaning system

Since both the current mass of dust in the system and the current masses of the individual components is known thanks to the integration of historical measured data as described above it is possible to calculate the current concentrations of components in the dust circulating in the system 1:

| Parameter | Value | Unit |
|---|---|---|
| Fly ash concentration | CFA | kg/kg |
| AC concentration | CC | kg/kg |
| Inert lime concentration | CINERT | kg/kg |
| Carbonized lime conc. | CCaCO3 | kg/kg |
| Hydrated lime concentration | CCa(OH)2 | kg/kg |
| CaSO3&SO4 * XH2O conc. | CCaS | kg/kg |
| CaCl2 * 2H2O conc. | CCaCl | kg/kg |

$$CFA(t+dt) = [CFA(t)*m(t) + mFA(t)*dt] / m(t+dt)$$

$$CC(t+dt) = [CC(t)*m(t) + mC(t)*dt] / m(t+dt)$$

$$CINERT(t+dt) = [CINERT(t)*m(t) + mINERT(t)*dt] / m(t+dt)$$

$$CCaCO3(t+dt) = [CCaCO3(t)*m(t) + mCaCO3(t)*dt] / m(t+dt)$$

$$CCa(OH)2(t + dt) = [CCa(OH)2(t) * m(t) + mCa(OH)2(t)*dt] / m(t+dt)$$

$$CCaS(t+dt) = [CCaS(t)*m(t) + mCaS(t)*dt] / m(t+dt)$$

$$CCaCl(t+dt) = [CCaCl(t)*m(t) + mCaCl(t)*dt] / m(t+dt)$$

To analyse, in a lab, the concentration of chlorides in the dust is a quite time consuming activity which provides too slow a response and is too expensive to be useful in controlling a gas cleaning system. It is, however, suitable to regularly, such as twice per week, take out a dust sample and make a lab analysis of the chloride concentration in order to verify the mass balance calculations of the current chloride content, at the time of taking the dust sample, and make minor adjustments, if necessary.

The calculating device 40 receiving measurement data and calculating the current concentration of components in the dust based on historical measurement data makes it possible to control the gas cleaning system 1. For this purpose the calculating device 40 sends a signal to a control device 50. The signal includes the current concentration in the circulating dust of at least one component prone to cause problems of sticky dust. Usually at least information on the current concentration of chlorides is part of that information. The control device 50 controls at least one control parameter based on the information on the concentration of the sticky component, for instance the concentration of chloride.

If, for example, the calculating device 40 informs the control device 50 that the current concentration of chlorides in the dust circulating in the system 1 is reaching a limit concentration, the control device 50 may send a signal to a valve 52 controlling the feed of fresh absorbent to open more. In that way more fresh absorbent is added to the dust and dilutes the chlorides such that the current concentration of chlorides decreases below the limit concentration. If, on the other hand, the concentration of chlorides is well below the limit then there is no need for any dilution and the feed of fresh absorbent may be controlled based on the amount of absorbent required to react with gaseous pollutants. Thus, in a situation where the concentrations of the gaseous pollutants in the gas remains rather stable for some time the inventive method makes it possible to feed only as much fresh absorbent as is required to keep the current chloride concentration just below the limit concentration, or the amount required to react with the gaseous pollutants. Thus the excess of fresh absorbent is decreased compared to prior art since, in prior art, large excess amounts are often required as the current chloride concentration is not known and a large safety margin is required.

If the content of a gaseous pollutant increases rapidly, which is called a peak situation, the present invention provides several options for how to control the system such that an increased removal of the gaseous pollutant may be quickly achieved to handle the peak situation. The tendency of the dust to become sticky is not only dependent on the concentration of chlorides but also on the water content in the flue gas and the temperature in the flue gas. At a high water content in the flue gas less chlorides is allowed if sticking problems are to be avoided. A high water content is, however, also beneficial for the conversion of the gaseous pollutants, in particular $SO_2$, in the contact reactor 4. The same is valid for flue gas temperature, i.e. a low flue gas temperature is beneficial for removal of gaseous pollutants but also increases the risk of sticking problems. In a first example, if the control device 50 has received a signal from the calculating device 40 that the current chloride concentration is well below the limit concentration, the control device 50 may order a valve 54 controlling the supply of water to open such that more water is added to the dust in the mixer 8. Thus the moistened dust introduced in the contact reactor 4 will have a higher water content which will result in a higher water content of the flue gas, and, due to evaporation of the water, a decreased flue gas temperature. Thereby the removal efficiency in the contact reactor 4 is improved and the peak is handled. In a second example, if the control device 50 has received a signal from the calculating device 40 that the current chloride concentration is near the limit concentration, the control device 50 may order the valve 52 to increase the feed of fresh lime such that the chlorides are diluted simultaneously with ordering the valve 54 to increase the amount of water added to the dust in the mixer 8. In some other cases it may be better to have the control device 50 open a valve 56 which controls the rate of recirculation of dust in order to increase the rate of circulating dust in the system 1. Thus the present invention, in which the control device 50 is aware of the current chloride concentration in the dust, provides for the choice of different strategies for handling a peak situation depending on the current concentration of chlorides in the dust.

It will be appreciated that numerous variants of the above described embodiments are possible within the scope of the appended claims.

It will be appreciated that in addition to chlorides the present invention could also be adapted to account for other components being prone to make the dust sticky. Examples of such components include ammonia, $NH_3$, and zinc. By measuring, directly or indirectly, the flow of $NH_3$ or zinc to the gas cleaning system and storing historical data it is possible to calculate a current concentration of these substances in the circulating dust and to use this information for controlling the system 1. In Fig. 1 is indicated, schematically, an $NH_3$-analyser 58 adapted for providing input for calculating the flow of ammonia to the system.

In accordance with what is described above the current concentration of a sticky component, chlorides, is calculated based on historical data for several components, including fly ash, several reaction products, inert material, discharge etc. In a simplified version the only things measured are the mass flow of chlorides, based on flue gas flow and the measured data from the HCl analyser 42, to the system and the amount of dust discharged from the system. Assuming that the total amount of dust circulating in the system is rather constant the current concentration of chlorides in the dust circulating in the system may be calculated if the amount of dust discharged is also measured. In a still further alternative the amount of dust discharged is calculated indirectly, for instance by means of the method described above for calculating the total mass flow to the gas cleaning system, mTOT, and under the assumption that the total amount of dust circulating in the system is rather constant.

Above it is described that a flow of fresh absorbent to the system and/or a flow of water for moistening the dust could be controlled in response to the current concentration of the sticky component. A still further alternative control parameter, which could be used in combination with any of the other control parameters or on its own, is to control the amount of fly ash that enters the system. If a fly ash collector, such as an electrostatic precipitator (ESP), is located upstream of the gas cleaning system according to the invention the amount of fly ash entering the gas cleaning system could be controlled. If, for instance, it is found, by the mass balance, that the current concentration of the sticky component in the circulating dust is too high, the ESP could be controlled to operate less efficient such that more fly ash enters the gas cleaning system and dilutes the dust. In that way the concentration of the sticky component is decreased and problems of stickiness of the dust can be avoided. A further option is to feed fly ash from another source, such as a silo containing fly ash from another plant, directly into the dust circulating in the system, for instance directly into the mixer 8, in order to control the concentration of said sticky component. Thus addition of fly ash, either from an upstream fly ash collector or from another source, represents a further control parameter of the gas cleaning system, which parameter could be controlled on the basis of the calculated current concentration of the sticky component.

The invention is applicable to cleaning of process gases emanating from different types of process plants. Examples include waste incineration plants, coal or oil fired power plants, industrial boilers, metallurgical plants etc. The invention is particularly useful in cases where the process gases contain a comparably high concentration of a sticky component, such as chlorides, ammonia or zinc.

Above it is described that the dust is moistened in a mixer before being introduced in the contact reactor. It will be appreciated that the present invention is applicable also to other types of reactors. One example is reactors in which a dry dust and water is introduced separately in the reactor itself, the moistening of the dust occurring inside the actual reactor.

Example 1.

This example refers to a typical waste incineration plant. The flue gas cleaning system 1 is of the type illustrated above with reference to Fig. 1. Depending on what type of waste that is incinerated for the moment the content of HCl and $SO_2$ in the flue gas 2 may vary. In this example the content of $SO_2$ is often about 330 mg/Nm³ dry gas. The content of HCl is often about 140 mg/Nm³ dry gas, but it may increase up to 1000 mg/Nm³ dry gas for periods of several hours.

The gas cleaning system 1 is provided with the calculating device 40 which receives input data as indicated in Fig. 1. Based on the input data the calculating device 40 calculates the concentration of chlorides in the dust circulating in the system. In order to avoid problems with clogging in the fabric filter 6 and other locations a limit concentration for chlorides, in the form of $CaCl_2 \cdot 2H_2O$, has been set to 0,20 kg/kg (i.e. maximum 20 % by weight). The calculating device 40 calculates the current concentration of $CaCl_2 \cdot 2H_2O$ based on historical data and according to the principles described above and sends a signal to the control device 50 with this information.

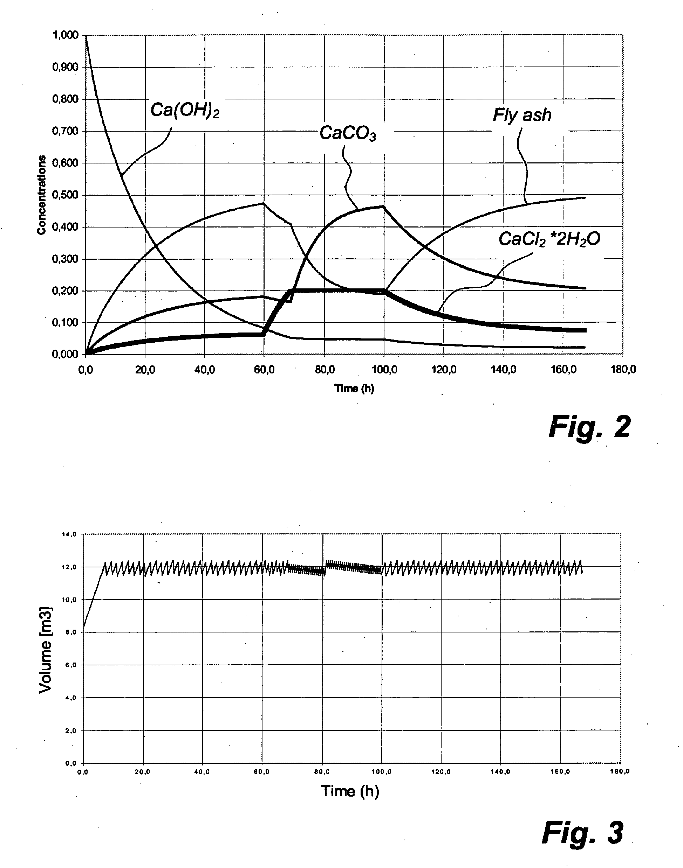

Fig. 2 illustrates the contents, in kg/kg, of Fly ash, $CaCO_3$, $CaCl_2 \cdot 2H_2O$ and $Ca(OH)_2$ as calculated by the calculating device 40. Further components, i.e. activated carbon, reaction products from $SO_2$ etc., are included in the calculation, but are not shown in Fig. 2 for reasons of clarity. The gas cleaning system 1 is started at the time 0 h. At start up the mixer 8 and the hoppers 18 are, for practical reasons, filled with hydrated lime, i.e. the weight fraction of hydrated lime, $Ca(OH)_2$, is 1.0 (100 % by weight) at the start. During the operation from 0 h to 60 h the content of HCl in the gas is stable at 140 mg/Nm³, dry gas. The addition of burnt lime, CaO, is stable at 73 kg/h. The chloride concentration reaches, after about 50 hours, a stable concentration of about 0,08 kg/kg (8 % by weight). This is well below the limit concentration 0,20 and the control device 50 controls the feed of fresh absorbent to the requirement for the reaction with the gaseous pollutants rather than the need for diluting the chlorides in the dust.

After 60 h of operation the HCl concentration in the flue gas 2 increases to 1000 mg/Nm$^3$ dry gas. The control device increases the addition of burnt lime, CaO, to 140 kg/h in order to meet the need as regards the reaction with the increased amount of gaseous pollutants. As can be seen the amount of chlorides increases due to the increased mass flow of chlorides to the system 1. At about 68 hours from the start the calculating device 40 sends a signal to the control device 50 that the current concentration of chlorides has reached the limit concentration of 0,20 (20 % by weight). In response to this the control device 50 immediately controls the valve 52 to increase the feed of burnt lime, CaO, to the mixer 8, in order to dilute the chlorides. A feed of burnt lime of 375 kg/h stabilizes the current chloride concentration at the limit concentration. After about 100 hours the HCl concentration in the flue gas decreases to about 140 mg/Nm$^3$ dry gas. The calculating device 40 calculates that the current chloride concentration in the dust drops below the limit concentration and sends a signal to the control device 50 that dilution of the dust is not necessary any more. The control device 50 controls the valve 52 to set the feed of burnt lime back to 73 kg/h.

Fig. 3 indicates the volume of dust in the system. Each "valley" on the curve represents a discharge of dust via the rotary discharger 24. Each discharge represents the same volume, in m$^3$, and thus the more frequent the valleys the more material is discharged. As can be seen discharge is made very frequently only during the high amount of chlorides, i.e. from 68 h to 100 h. This corresponds to a larger volume of dust discharged, i.e. a larger volume that needs to be sent to a landfill, while the volume discharged before and after the high amount of chlorides is low. The increased discharge rate during the period 68 h to 100 h causes a decrease in the fly ash concentration since the fly ash is more quickly discharged from the system. The content of CaCO$_3$ increases during the high chloride situation. The reason is that fresh absorbent, burnt lime, CaO, which is slaked to Ca(OH)$_2$ in the mixer, is fed in excess compared to what is needed to react with SO$_2$ and HCl. The excess amount of the fresh absorbent is converted to CaCO$_3$, which adds to the volume that has to be discharged, and later put on a landfill. With the present invention the period of increased feed of fresh absorbent is as short as possible. This provides for a lower amount of fresh absorbent consumed and a lower volume of dust discharged for landfill, seen over the whole cycle from 0 h to 160 h.

During the initial period of the peak situation, i.e from 60 h to about 64 h, the concentration of chlorides is still well below the limit concentration. During this period the control device 50 may, without problems of sticky dust, allow more water to be added to the dust by means of opening the valve 54. This provides for improved removal efficiency in the contact reactor 4 at the start of the peak situation and until a sufficient amount of fresh absorbent has had time to be mixed into the circulating dust. Thus the present invention also makes it possible to boost the removal efficiency of the gas cleaning system 1 at the initial phase of a peak situation.

Example 2 (Comparative) .

Example 2 is intended to illustrate how a gas cleaning system works when there is no calculating device providing information on the current concentration of chlorides in the dust. The flue gas conditions during the period 0 to 160 h are exactly the same as described in Example 1. In Example 2 there is no calculating device available and thus there is no signal sent to the control device. In the absence of information on the current concentration of chlorides the control device must assume the worst operating case, i.e. an HCl content in the flue gas of 1000 mg/Nm$^3$ dry gas. The feed of burnt lime therefore has to be controlled to 375 kg/h at all times.

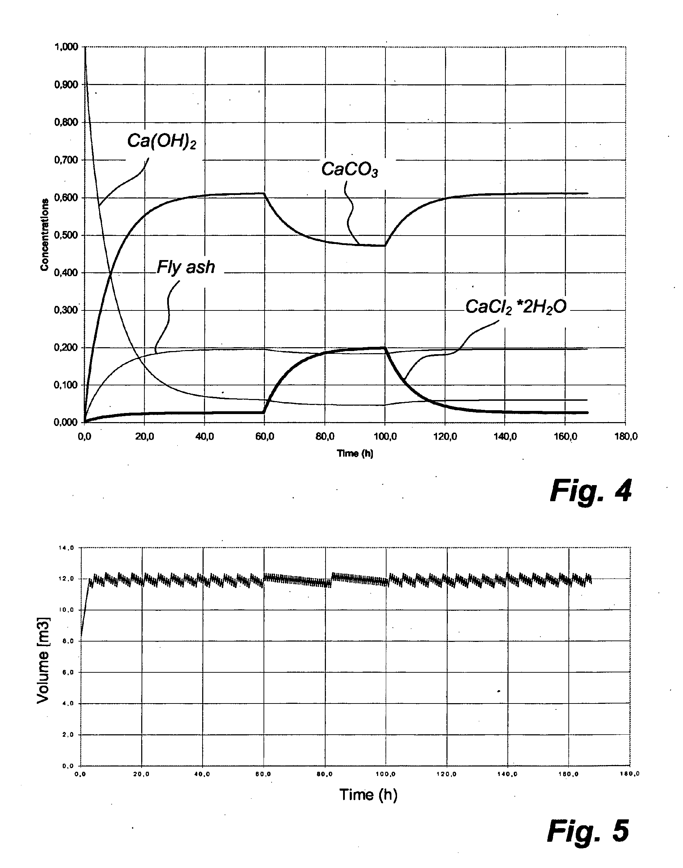

Fig. 4 illustrates, for better understanding, how the concentrations would look like from start of the system at 0 h, with only hydrated lime, and onwards. The information shown in Fig. 4 is, however, not available to the control device and neither to any of the operators.

As can be seen from Fig. 4 the amount of CaCO$_3$ is very high almost from the beginning. The reason is that burnt lime, CaO, which is slaked to Ca(OH)$_2$, is added in a large excess. From about 60 h, when the HCl content in the flue gas increases from 140 to 1000 mg/Nm$^3$ dry gas, to about 100 h the chloride content increases. Due to the large excess of burnt lime the chloride content remains below the limit concentration.

Figure 5, indicating the discharge of material in Example 2, shows that discharge is made very frequently from the system all the time from 0 h to 160 h. Thus, with the prior art technology and without knowledge of the current chloride concentration in the dust, the fresh absorbent is constantly overdosed in order to safe-guard that the dust does not get sticky. This results in an increased consumption of fresh absorbent and an increased volume of dust discharged and transported to a landfill. An alternative to the large overdosing of fresh absorbent is to put limits to the operation of the waste incineration plant such that the HCl content may never exceed, say 250 mg/Nm$^3$ dry gas. With such a limitation, which requires quite some effort by plant operators to mix different waste materials with high precision and may make it impossible to incinerate certain materials, the overdosing could be reduced, but still the consumption of fresh absorbent would be higher compared to the inventive method.

Further, since the control device of Example 2 does not know the current chloride concentration it can not add extra water in order to obtain a boost at the initial phase of the peak situation. Thus the emission of HCl to the atmosphere with the flue gas is higher compared to what can be achieved with the invention.

**EP 1 815 903 B1**

**Claims**

1.  A method of separating gaseous pollutants, such as hydrochloric acid and sulphur dioxide, from hot process gases (2), such as flue gases, in which method the process gases (2) are passed through a gas cleaning system comprising a contact reactor (4), a dust separator (6) and a dust moistening device (8), the process gases (2) first being passed through the contact reactor (4) in which a particulate absorbent material reactive with the gaseous pollutants is introduced in a moistened state into the process gases (2) in order to convert the gaseous pollutants into separable dust, after which the process gases are passed through the dust separator (6), in which dust is separated from the process gases and from which the cleaned process gases (14) are discharged, at least a portion of the dust collected in the dust separator (6) being mixed with water to be transferred to a moistened state by means of the dust moistening device (8) and to be introduced as said particulate absorbent material into the process gases (2) in the contact reactor (4) once again, a portion of the dust circulating in the gas cleaning system being discharged,
    **characterised in**
    measuring the content in the process gases (2), upstream of the contact reactor (4), of at least one sticky component being prone to cause sticking problems in the dust,
    measuring, directly or indirectly, the flow of said portion of the dust circulating in the gas cleaning system (1) being discharged,
    calculating the current concentration of said sticky component in the dust circulating in the gas cleaning system (1) based on a mass balance incorporating historical data on measured flow of discharged dust and historical data on the measured content of said sticky component in the process gases (2) upstream of the contact reactor (4), and
    controlling at least one control parameter of said gas cleaning system (1), which control parameter influences the stickiness of the circulating dust, in response to said current concentration of said sticky component in the dust circulating in the gas cleaning system (1).

2.  A method according to claim 1, wherein said at least one control parameter includes a flow of fresh absorbent to the gas cleaning system (1), the flow of fresh absorbent being controlled to keep the concentration of said sticky component in the dust circulating in the gas cleaning system (1) below a limit concentration.

3.  A method according to claim 1 or 2, wherein said at least one control parameter includes a flow of water fed to the gas cleaning system (1) to moisten the dust, the flow of water being controlled to keep the content of water in the moistened dust below the content at which sticking may occur.

4.  A method according to any one of claims 1-3, wherein said at least one control parameter includes an amount of fly ash entering the gas cleaning system.

5.  A method according to any one of claims 1-4, wherein historical measured data on a flow of fresh absorbent to said gas cleaning system (1) is included in the mass balance when calculating the current concentration of said sticky component in the dust circulating in the gas cleaning system.

6.  A method according to any one of claims 1-5, wherein historical measured data on a flow of at least one major reaction product formed during the conversion of gaseous pollutants into separable dust is included in the mass balance when calculating the current concentration of said sticky component in the dust circulating in the gas cleaning system.

7.  A method according to claim 6, wherein historical measured data on the content of sulphur dioxide in the process gases upstream of the contact reactor is used for calculating said flow of at least one major reaction product.

8.  A method according to any one of claims 1-7, wherein a content of fly ash in the process gases upstream of the contact reactor is estimated and the corresponding flow of fly ash separated in the dust separator (6) is included in the mass balance.

9.  A method according to any one of claims 1-8, wherein said at least one sticky component is chosen from the group containing chloride, ammonia and zinc.

10. A gas cleaning system for separating gaseous pollutants, such as hydrochloric acid and sulphur dioxide, from hot process gases (2), such as flue gases, comprises a contact reactor (4), a dust separator (6) and a dust moistening device (8), the contact reactor (4) being adapted for receiving process gases (2) and for first passing them through the contact reactor (4) in which a particulate absorbent material reactive with the gaseous pollutants is introduced in a moistened state into the process gases (2) in order to convert the gaseous pollutants into separable dust, the dust separator (6) being adapted to then receive the process gases, to separate dust from the process gases and to discharge the cleaned process gases (14), the dust moistening device (8) being adapted for transferring at least a portion of the dust collected in the dust separator (6) to a moistened state by mixing such dust with water and to introduce such dust mixed with water as said particulate absorbent material into the process gases (2) in the contact reactor (4) once again, a portion of the dust circulating in the gas cleaning system being discharged, **characterised in that** the gas cleaning system further comprises

a first measurement device (42) adapted for measuring the content in the process gases (2), upstream of the contact reactor (4), of at least one sticky component being prone to cause sticking problems in the dust;

a second measurement device (24) adapted for measuring, directly or indirectly, the flow of said portion of the dust circulating in the gas cleaning system (1) being discharged,

a calculating device (40) adapted for calculating the current concentration of said sticky component in the dust circulating in the gas cleaning system (1) based on a mass balance incorporating historical data on measured flow of discharged dust and historical data on the measured content of said sticky component in the process gases (2) upstream of the contact reactor (4), and

a control device (50) controlling at least one control parameter of said gas cleaning system (1), which control parameter influences the stickiness of the circulating dust, in response to said current concentration of said sticky component in the dust circulating in the gas cleaning system (1).

## Patentansprüche

1. Eine Methode zum Abscheiden gasförmiger Schadstoffe wie Chlorwasserstoffsäure und Schwefeldioxid von heißen Prozessgasen (2), wie Rauchgasen, bei welcher die Prozessgase (2) durch ein Gasreinigungssystem geleitet werden, das aus einem Kontaktofen (4), einem Staubabscheider (6) und einem Staubbefeuchtungsgerät (8) besteht, wobei die Prozessgase (2) zuerst durch den Kontaktofen (4) strömen, in dem ein Partikelabsorptionsmaterial, das mit den gasförmigen Schadstoffen reagiert, in befeuchtetem Zustand in die Prozessgase (2) eingeleitet wird, um die gasförmigen Schadstoffe in abscheidbaren Staub umzuwandeln. Anschließend werden die Prozessgase durch den Staubabscheider (6) geleitet, in dem Staub von den Prozessgasen abgeschieden wird, und aus dem gereinigte Prozessgase (14) abgelassen werden, wobei zumindest ein Anteil des im Staubabscheider (6) gesammelten mit Wasser vermischten Staubs mit Hilfe des Staubefeuchtungsgeräts (8) in einen befeuchteten Zustand überführt wird und als besagtes Partikelabsorptionsmaterial erneut in die Prozessgase (2) im Kontaktofen (4) eingeleitet wird, wobei ein Teil des Staubs, der im Gasreinigungssystem zirkuliert, abgelassen wird. Die Methode ist charakterisiert durch

   die Messung des Gehalts von mindestens einem klebrigen Bestandteil, der dafür anfällig ist, Probleme bezüglich von Klebrigkeit im Staub zu verursachen, in den Prozessgasen (2) stromaufwärts des Kontaktofens (4),

   die direkte oder indirekte Messung des Durchflusses besagten Anteils des Staubs, der im Gasreinigungssystem (1) zirkuliert, und abgelassen wird,

   die Berechnung der aktuellen Konzentration des besagten klebrigen Bestandteils im Staub, der im Gasreinigungssystem (1) zirkuliert, anhand einer Massenbilanz unter Berücksichtigung historischer Daten über den gemessenen Durchfluss des abgelassenen Staubs und historischer Daten über den gemessenen Gehalt besagten klebrigen Bestandteils in den Prozessgasen (2) stromaufwärts des Kontaktofens (4), und

   der Regelung von zumindest einem Regelparameter des besagten Gasreinigungssystems (1), wobei dieser Regelparameter die Klebrigkeit des zirkulierenden Staubs als Reaktion auf besagte aktuelle Konzentration besagten klebrigen Bestandteils im Staub, der in dem Gasreinigungssystem (1) zirkuliert, beeinflusst.

2. Eine Methode gemäß Anspruch 1, wobei zumindest ein besagter Regelparameter einen Strom von frischem Absorptionsmittel zum Gasreinigungssystem (1) umfasst, wobei der Durchfluss des frischen Absorptionsmittels geregelt wird, um die Konzentration besagten klebrigen Bestandteils im Staub, der in dem Gasreinigungssystem (1) zirkuliert, unter einem Konzentrationsgrenzwert zu halten.

3. Eine Methode gemäß Anspruch 1 oder 2, wobei zumindest einer der besagten Regelparameter einen Wasserdurchfluss umfasst, der in das Gasreinigungssystem (1) eingespeist wird, um den Staub zu befeuchten, wobei das Wasser geregelt wird, um den Wassergehalt im befeuchteten Staub unterhalb des Gehalts zu halten, bei dem Kleben auftreten kann.

4. Eine Methode gemäß einem beliebigen der Ansprüche 1-3, wobei zumindest einer der besagten Regelparameter eine Menge an Flugasche umfasst, die in das Gasreinigungssystem einströmt.

5. Eine Methode gemäß einem beliebigen der Ansprüche 1-4, wobei historisch gemessene Daten über einen Durchfluss an frischem Absorptionsmittel in besagtes Gasreinigungssystem (1) in der Massenbilanz enthalten sind, wenn die aktuelle Konzentration besagten klebrigen Bestandteils in dem Staub, der im Gasreinigungssystem zirkuliert, berechnet wird.

6. Eine Methode gemäß einem beliebigen der Ansprüche 1-5, wobei historisch gemessene Daten über einen Durchfluss von mindestens einem wichtigen Reaktionsprodukt, das während der Umwandlung gasförmiger Schadstoffe in abscheidbarem Staub gebildet wird, in der Massenbilanz enthalten sind, wenn die aktuelle Konzentration besagten klebrigen Bestandteils im Staub, der in dem Gasreinigungssystem zirkuliert, berechnet wird.

7. Eine Methode gemäß Anspruch 6, wobei historisch gemessene Daten über den Gehalt an Schwefeldioxid in den Prozessgasen stromaufwärts von dem Kontaktofen verwendet werden, um besagten Durchfluss von mindestens einem wichtigen Reaktionsprodukt zu berechnen.

8. Eine Methode gemäß einem beliebigen der Ansprüche 1-7, wobei ein Gehalt an Flugasche in den Prozessgasen stromaufwärts des Kontaktofens geschätzt wird und der entsprechende Durchfluss an Flugasche, der in dem Staubabscheider (6) abgeschieden wird, in der Massenbilanz enthalten ist.

9. Eine Methode gemäß einem beliebigen der Ansprüche 1-8, wobei mindestens ein besagter klebriger Bestandteil aus der Chlorid, Ammoniak und Zink enthaltenden Gruppe ausgewählt wird.

10. Ein Gasreinigungssystem zum Abscheiden gasförmiger Schadstoffe wie Chlorwasserstoffsäure und Schwefeldioxid von heißen Prozessgasen (2) wie Rauchgasen, besteht aus einem Kontaktofen (4), einem Staubabscheider (6) und einem Staubbefeuchtungsgerät (8), wobei der Kontaktofen (4) für die Aufnahme von Prozessgasen (2) angepasst ist, und um sie zuerst durch den Kontaktofen (4) zu leiten, in dem ein Partikelabsorptionsmaterial, das mit den gasförmigen Schadstoffen reagiert, in einem befeuchteten Zustand in die Prozessgase (2) eingeleitet wird, um die gasförmigen Schadstoffe in abscheidbaren Staub umzuwandeln, wobei der Staubabscheider (6) zu anschließenden Aufnahme der Prozessgase angepasst ist, um Staub von den Prozessgasen abzuscheiden und die gereinigten Prozessgase (14) abzulassen, wobei das Staubbefeuchtungsgerät (8) zur Übertragung von zumindest einem Teil des im Staubabscheider (6) gesammelten Staubs in einen befeuchteten Zustand angepasst ist, indem dieser Staub mit Wasser vermischt wird, und dieser mit Wasser vermischte Staub als besagtes Partikelabsorptionsmaterial erneut in die Prozessgase (2) im Kontaktofen (4) eingeleitet wird, wobei ein Teil des im Gasreinigungssystem zirkulierenden Staubs abgelassen wird,
charakterisiert **dadurch**, dass das Gasreinigungssystem weiterhin

ein erstes Messgerät (42) umfasst, das zur Messung des Gehalts in den Prozessgasen (2) stromaufwärts des Kontaktofens (4) von zumindest einem klebrigen Bestandteil angepasst ist, der anfällig dafür ist, Probleme mit Klebrigkeit im Staub zu verursachen,
ein zweites Messgerät (24) umfasst, das zur direkten oder indirekten Messung des Durchflusses besagten Anteils des Staubs, der im Gasreinigungssystem (1) zirkuliert und abgelassen wird, angepasst ist,
ein Berechnungsgerät (40), das zur Berechnung der aktuellen Konzentration besagten klebrigen Bestandteils anhand einer Massenbilanz, die historische Daten über den gemessenen Durchfluss des abgelassenen Staubs und historische Daten über den gemessenen Gehalt des besagten klebrigen Bestandteils in den Prozessgasen (2) stromaufwärts des Kontaktofens (4)beinhaltet, in dem Staub, der im Gasreinigungssystem (1) zirkuliert, angepasst ist, und
ein Regelgerät (50), das mindestens einen Regelparameter des besagten Gasreinigungssystems (1) regelt, wobei der Regelparameter als Reaktion auf besagte aktuelle Konzentration besagten klebrigen Bestandteils in dem Staub, der im Gasreinigungssystem (1) zirkuliert, die Klebrigkeit des zirkulierenden Staubs beeinflusst.

**Revendications**

1. Procédé de séparation de polluants gazeux, tels que l'acide chlorhydrique et le dioxyde de soufre, de gaz de procédé chauds (2), tels que des gaz de combustion, selon lequel les gaz de procédé (2) sont passés au travers d'un système de nettoyage des gaz comprenant un réacteur de contact (4), un séparateur de poussière (6) et un dispositif d'humidification de la poussière (8), les gaz de procédé (2) passant tout d'abord au travers du réacteur de contact (4) dans lequel un matériau particulaire absorbant réactif avec les polluants gazeux est introduit à un état humidifié dans les gaz de procédé (2) afin de transformer les polluants gazeux en une poussière séparable, puis les gaz de procédé sont passés au travers du séparateur de poussière (6), dans lequel la poussière est séparée des gaz de procédé et à partir duquel les gaz de procédé nettoyés (14) sont déchargés, au moins une partie de la poussière recueillie dans le séparateur de poussière (6) étant mélangée avec de l'eau pour être transférée à un état humidifié au moyen du dispositif d'humidification de la poussière (8) et pour être introduite à nouveau en tant que matériau particulaire aborbant dans les gaz de procédé (2) dans le réacteur de contact (4), une partie de la poussière en circulation dans le système de nettoyage des gaz étant déchargée,
**caractérisé par**
la mesure de la teneur des gaz de procédé (2), en amont du réacteur de contact (4), en au moins un composant collant enclin à causer des problèmes de collement dans la poussière,
la mesure, directe ou indirecte, du débit de ladite partie de la poussière en circulation dans le système de nettoyage des gaz (1) qui est déchargée,
le calcul de la concentration actuelle dudit composant collant dans la poussière en circulation dans le système de nettoyage des gaz (1) à partir d'un équilibre de masse incorporant des données historiques relatives au débit mesuré de la poussière déchargée et des données historiques relatives à la teneur mesurée dudit composant collant dans les gaz de procédé (2) en amont du réacteur de contact (4) et
le réglage d'au moins un paramètre de réglage dudit système de nettoyage des gaz (1), ledit paramètre de réglage influençant le caractère collant de la poussière en circulation, en réponse à ladite concentration actuelle dudit composant collant dans la poussière en circulation dans le système de nettoyage des gaz (1).

2. Procédé selon la revendication 1, dans lequel ledit ou lesdits paramètres de réglage comprennent un débit d'absorbant frais introduit dans le système de nettoyage des gaz (1), le débit d'absorbant frais étant réglé afin de maintenir la concentration dudit composant collant dans la poussière en circulation dans le système de nettoyage des gaz (1) inférieure à une concentration limite.

3. Procédé selon la revendication 1 ou 2, dans lequel ledit ou lesdits paramètres de réglage comprennent un débit d'eau introduite dans le système de nettoyage des gaz (1) pour humidifier la poussière, le débit d'eau étant réglé pour maintenir la teneur en eau dans la poussière humidifiée inférieure à la teneur à laquelle un collement peut avoir lieu.

4. Procédé selon l'une quelconque des revendications 1 à 3, dans lequel ledit ou lesdits paramètres de réglage comprennent une quantité de cendres volantes pénétrant dans le système de nettoyage des gaz.

5. Procédé selon l'une quelconque des revendications 1 à 4, dans lequel des données historiques mesurées relatives à un débit d'absorbant frais introduit dans ledit système de nettoyage des gaz (1) sont incluses dans l'équilibre de masse lors du calcul de la concentration actuelle dudit composant collant dans la poussière en circulation dans le système de nettoyage des gaz.

6. Procédé selon l'une quelconque des revendications 1 à 5, dans lequel des données historiques mesurées relatives à un débit d'au moins un produit de réaction majeur formé lors de la transformation des polluants gazeux en poussière séparable sont incluses dans l'équilibre de masse lors du calcul de la concentration actuelle dudit composant collant dans la poussière en circulation dans le système de nettoyage des gaz.

7. Procédé selon la revendication 6, dans lequel des données historiques mesurées relatives à la teneur en dioxyde de soufre des gaz de procédé en amont du réacteur de contact sont utilisées pour le calcul dudit débit d'au moins un produit de réaction majeur.

8. Procédé selon l'une quelconque des revendications 1 à 7, dans lequel une teneur en cendres volantes des gaz de procédé en amont du réacteur de contact est estimée et le débit correspondant des cendres volantes séparées dans le séparateur de poussière (6) est inclus dans l'équilibre de masse.

9. Procédé selon l'une quelconque des revendications 1 à 8, dans lequel ledit ou lesdits composants collants sont choisis dans le groupe contenant chlorure, ammoniac et zinc.

10. Système de nettoyage des gaz destiné à séparer des polluants gazeux, tels que l'acide chlorhydrique et le dioxyde de soufre, de gaz de procédé chauds (2), tels que des gaz de combustion, comprenant un réacteur de contact (4), un séparateur de poussière (6) et un dispositif d'humidification de la poussière (8), le réacteur de contact (4) étant conçu pour recevoir les gaz de procédé (2) et pour les passer tout d'abord au travers du réacteur de contact (4) dans lequel un matériau particulaire absorbant réactif avec les polluants gazeux est introduit à un état humidifié dans les gaz de procédé (2) afin de transformer les polluants gazeux en une poussière séparable, le séparateur de poussière (6) étant conçu pour recevoir ensuite les gaz de procédé, pour séparer la poussière des gaz de procédé et pour décharger les gaz de procédé nettoyés (14), le dispositif d'humidification de la poussière (8) étant conçu pour transférer au moins une partie de la poussière recueillie dans le séparateur de poussière (6) à un état humidifié en mélangeant une telle poussière avec de l'eau et pour introduire à nouveau une telle poussière mélangée avec de l'eau en tant que matériau particulaire aborbant dans les gaz de procédé (2) dans le réacteur de contact (4), une partie de la poussière en circulation dans le système de nettoyage des gaz étant déchargée,

**caractérisé en ce que** le système de nettoyage des gaz comprend également

un premier dispositif de mesure (42) conçu pour mesurer la teneur des gaz de procédé (2), en amont du réacteur de contact (4), en au moins un composant collant enclin à causer des problèmes de collement dans la poussière,

un second dispositif de mesure (24) conçu pour mesurer, directement ou indirectement, le débit de ladite partie de la poussière en circulation dans le système de nettoyage des gaz (1) qui est déchargée,

un dispositif de calcul (40) conçu pour calculer la concentration actuelle dudit composant collant dans la poussière en circulation dans le système de nettoyage des gaz (1) à partir d'un équilibre de masse incorporant des données historiques relatives au débit mesuré de la poussière déchargée et des données historiques relatives à la teneur mesurée dudit composant collant dans les gaz de procédé (2) en amont du réacteur de contact (4) et

un dispositif de réglage (50) destiné à régler au moins un paramètre de réglage dudit système de nettoyage des gaz (1), ledit paramètre de réglage influençant le caractère collant de la poussière en circulation, en réponse à ladite concentration actuelle dudit composant collant dans la poussière en circulation dans le système de nettoyage des gaz (1).

EP 1 815 903 B1

Fig. 1

18

Fig. 2

Fig. 3

**Fig. 4**

**Fig. 5**

20

**EP 1 815 903 B1**

**Patent documents cited in the description**

- WO 9616722 A
- WO 9737747 A1